# EUROPÄISCHE PATENTSCHRIFT

(11) **EP 1 999 362 B1**
(45) Veröffentlichungstag und Bekanntmachung des Hinweises auf die Patenterteilung: **07.09.2011**
(21) Anmeldenummer: 07723403.7
(22) Anmeldetag: 20.03.2007
(51) Int. Cl.: F02M 25/07

(54) **ANORDNUNG MIT EINEM GESCHÜTZTEN TURBOLADER IN DER ABGASRÜCKFÜHRLEITUNG**
ARRANGEMENT WITH A PROTECTED TURBOCHARGER IN THE EXHAUST GAS RECIRCULATION LINE
ARRANGEMENT COMPRENANT UN TURBOCOMPRESSEUR PROTÉGÉ DANS LA CONDUITE DE RETOUR DES GAZ D'ÉCHAPPEMENT

(30) Priorität: 24.03.2006 DE 102006013709
(43) Veröffentlichungstag der Anmeldung: 10.12.2008
(60) Teilanmeldung: 09013069.1
(73) Patentinhaber: Emitec Gesellschaft für Emissionstechnologie mbH, 53797 Lohmar (DE)
(72) Erfinder: ROLLE, Arndt-Udo, 71638 Ludwigsburg (DE); BRÜCK, Rolf, 51429 Bergisch Gladbach (DE)
(74) Vertreter: Rössler, Matthias
(86) Internationale Anmeldenummer: PCT/EP2007/002437
(87) Internationale Veröffentlichungsnummer: WO 2007/110170

(56) Entgegenhaltungen:
- EP-A- 0 321 451
- WO-A-00/77353
- WO-A-2004/042222
- WO-A1-01/36805
- DE-A1- 2 610 042
- DE-A1- 3 919 533
- JP-A- 62 083 015
- JP-A- 2001 132 555
- US-A- 4 345 572
- US-A1- 2005 109 017
- US-A1- 2006 021 335
- US-B1- 6 301 887

## Beschreibung

Die vorliegende Erfindung betrifft eine Anordnung zur Behandlung von Abgasen einer Verbrennungskraftmaschine mit einem vorgegebenen Hubraum, die eine Abgasrückführleitung aufweist, wobei das dort hindurch strömende Abgas mit einem Turbolader zusammenwirkt. Die Erfindung findet insbesondere Anwendung bei mobilen Verbrennungskraftmaschinen, wie sie beispielsweise bei Kraftfahrzeugen vorgesehen sind.

Derartige Abgasbehandlungsanordnungen mit einer Abgasrückführung sind vielfach bekannt. Ziel bei der Bereitstellung solcher Anordnungen ist es, dass teilweise noch nicht vollständig umgesetzte Abgas wieder der Verbrennungskraftmaschine zuzuführen, um auf diese Weise eine vollständigere Umsetzung von unverbrannten Kohlenwasserstoffen und/oder eine weitere Konvertierung von Abgasbestandteilen zu gewährleisten.

Durch den Einsatz eines Turboladers sollen regelmäßig höhere Drehmomente und somit höhere Motorleistungen bezüglich der Verbrennungskraftmaschine erzielt werden. Dies gelingt, in dem die angesaugte Luft bzw. das zurück geführte Abgas verdichtet wird. Infolge der erhöhten Dichte kann bei jedem Einlasstakt insbesondere mehr Sauerstoff in den Brennraum des Motors gelangen. Mit dem höheren Sauerstoffgehalt ist eine verbesserte Verbrennung möglich, so dass letztendlich die Leistung gesteigert werden kann. Die Wärme- und Bewegungsenergie des Motorabgases wird dabei regelmäßig genutzt, um die Abgasturbine des Turboladers anzutreiben. Die Abgasturbine betreibt den Verdichter in der Abgasrückführleitung bzw. der Luftansaug-Leitung.

Es hat sich nun jedoch herausgestellt, dass gerade der Verdichter des Turboladers gelegentlich beachtliche Schäden aufweist, die infolge des Eindringens von

Fremdkörpern insbesondere am Verdichterrad festzustellen sind. Diese Fremdkörper sind insbesondere Teile vorgelagerter Abgasbehandlungskomponenten, deren Beschichtungen und/oder auch Feststoffe, die dem Abgas als Additiv zugegeben werden oder sich in der Abgasleitung gebildet haben.

Aus der US 2006/0021335 A1 ist ein Abgasbehandlungssystem für eine Leistungsquelle mit folgenden Bestandteilen bekannt, dass ein Lufteinleitungssystem und ein Auslasssystem aufweist. Das Auslasssystem umfasst dabei einen ersten Partikelfilter und einen zweiten Partikelfilter, der in Reihe mit dem ersten Partikelfilter angeordnet ist. Weiter ist ein Rückzirkulationssystem vorgesehen, das konfiguriert ist, um mindestens einen Teil eines Abgasflusses von einer Stelle zwischen dem ersten Partikelfilter und dem zweiten Partikelfilter abzuziehen und zumindest diesen Teil des Abgasflusses zum Lufteinleitungssystem zu leiten. Dort wird auch angeführt, dass im Rückzirkulationssystem ein weiterer Partikelfilter positioniert sein kann, der im Wesentlichen wie die anderen Partikelfilter ausgeführt ist.

Zudem schlägt die US 2005/109017 A1 vor, dass schädliche Carbon-Teilchen in einer Abgasrückführleitung mit Hilfe eines Nachbrenners beseitigt werden sollten, so dass diese die Ventile der Abgasrückführleitung nicht beschädigen. Als Nachbrenner wird insbesondere ein metallisches Netz vorgeschlagen, das stromaufwärts von einem Ventil zu positionieren ist. Dieser Nachbrenner fängt diese Teilchen ein und verbrennt diese.

Weiterhin wird noch auf die JP 62-083015 A hingewiesen, die einen gewickelten bzw. gestapelten Filter aus gewellten metallischen Lagen beschreibt.

Ein weiteres System einer Abgasrückführung geht aus der DE 2 610 042 A1 hervor. Dabei soll ein genügender Druck für die Rückführung der Abgase zum Ansaugsystem hergestellt werden, so dass keine zusätzliche Energie zugeführt werden muss, um Abgas unter geeignetem Druck in das Einlasssystem der Maschine einzuführen.

Hiervon ausgehend ist es Aufgabe der vorliegenden Erfindung, die mit Bezug auf den Stand der Technik geschilderten technischen Probleme zumindest teilweise zu lösen. Insbesondere soll eine Anordnung zur Behandlung von Abgasen angegeben werden, die einen dauerhaften Betrieb des Turboladers gewährleistet, wobei gleichzeitig die Effektivität des Turboladers bzw. der gewünschte Ladedruck ohne weiteres erreicht werden kann.

Diese Aufgaben werden gelöst mit einer Anordnung gemäß den Merkmalen des Patentanspruchs 1. Weitere vorteilhafte Ausgestaltungen der Anordnung sind in den abhängig formulierten Patentansprüchen angegeben. Es ist darauf hinzuweisen, dass die in den Unteransprüchen einzeln aufgeführten Merkmale in beliebiger, technologisch sinnvoller, Weise miteinander kombiniert werden können und weitere Ausgestaltungen der Erfindung aufzeigen.

Die erfindungsgemäße Anordnung zur Behandlung von Abgasen einer Verbrennungskraftmaschine mit einem vorgegebenen Hubraum weist eine Abgasrückführleitung auf, wobei das dort hindurchströmende Abgas mit einem Turbolader zusammenwirkt, wobei weiter in der Abgasrückführleitung vor dem Turbolader eine Sieblage vorgesehen ist, die größer als ein mittlerer Querschnitt der Abgasrückführleitung ist.

Weiterhin umfasst die Sieblage ein Gewebe mit Drahtfilamenten, welches eine Mehrzahl von Öffnungen mit einer Weite in einem Bereich von 0,1 bis 0,25 Millimeter aufweist. Dabei sind bei dem Gewebe zwei verschiedene Arten Drahtfilamente vorgesehen, wobei die verschiedenen Arten Drahtfilamente unterschiedliche Dicken aufweisen.

Grundsätzlich ist es möglich, dass eine solche Anordnung im Zusammenhang mit einer stationären Verbrennungskraftmaschine betrieben wird, bevorzugt ist jedoch der Einsatz mit einer mobilen Verbrennungskraftmaschine. Die Erfindung betrifft dabei insbesondere Ottomotoren, Dieselmotoren und dergleichen. Diesen Verbrennungskraftmaschinen ist gemein, dass diese einen Hubraum aufweisen. Unter einem Hubraum wird die Summe des Volumens verstanden, dass die Verbrennungsräume der Verbrennungskraftmaschine insgesamt aufweisen. Der Hubraum für solche Verbrennungskraftmaschinen liegt insbesondere im Bereich von 0,5 1 bis 13,0 1, wobei bei den derzeitig anzutreffenden Automobilen in der überwiegenden Mehrzahl ein Hubraum im Bereich von 0,8 1 bis 3,01 zum Einsatz gelangt.

Hier wird nun vorgeschlagen, aus Sicht des Abgasstromes gesehen vor dem Turbolader eine Sieblage vorzusehen. Mit einer Sieblage ist insbesondere ein flächiges Gebilde gemeint. Eine solche Sieblage unterscheidet sich gegenüber bekannten Filtern beispielsweise dadurch, dass diese keine Vielzahl von Kanälen bereitstellt, sondern großflächig angeströmt wird. Die Sieblage kann dabei einerseits als eine den Querschnitt der Abgasrückführleitung überspannende Fläche ausgebildet sein, gegebenenfalls sind jedoch auch einfache Falt- oder Fügekonstruktionen möglich, beispielsweise nach Art eines Zylinders, eines Sackes, einer Falte oder dergleichen. Regelmäßig weist dann dieses Formgebilde nur einen einzelnen Einströmkanal auf, über den das Abgas mit der dem Großteil der, insbesondere der gesamten, Siebfläche kontaktiert wird.

Im Hinblick auf die Größe der Sieblage wird gefordert, dass die Sieblage größer als ein mittlerer Querschnitt der Abgasrückführleitung ist, mit anderen Worten also bevorzugt (wenigstens teilweise) nicht (nur) parallel zum mittleren Querschnitt positioniert ist, sondern beispielsweise eine Struktur aufweist oder schräg zum Querschnitt angeordnet ist. Bezogen auf den mittleren Querschnitt ist anzumerken, dass dieser einen Mittelwert über die gesamte Länge der Abgasrückführleitung darstellt. Üblicherweise liegen die Durchmesser der Abgasrückführleitungen von Personenkraftwagen im Bereich von 30 Millimeter [mm], so dass sich ein mittlerer Querschnitt von ca. 700 Quadratmillimeter [mm²] ergibt. Infolge der vergrößerten Siebfläche kann das Abgas die Sieblage mit einem deutlich kleineren Druckverlust durchströmen. Damit ist eine wirkungsvolle Schutzmaßnahme getroffen, die gleichwohl das Anströmverhalten des Abgases hin zum Turbolader nur unwesentlich beeinträchtigt.

Die Sieblage umfasst ein Gewebe mit Drahtfilamenten . Grundsätzlich ist es natürlich möglich, ein Vlies mit Drahtfilamenten einzusetzen, bei denen eine "chaotische" Verteilung der Drahtfilamente vorliegt. Erfindungsgemäß ist jedoch eine Art Gewebe, also ein Gebilde, bei dem die Drahtfilamente in einer Ordnung zueinander positioniert und miteinander zusammenwirkend angeordnet sind. Damit können die Abstände der Drahtfilamente zueinander und die dadurch gebildeten Öffnungen zum Durchtritt des Abgasstromes sehr gleichmäßig ausgeführt werden. Die Drahtfilamente sind regelmäßig aus einem hochtemperaturfesten, korrosionsbeständigen Material, wie z.B. einem Chrom und/oder Aluminium umfassenden Stahl. Bei einem solchen Gewebe sind wenigstens zwei verschiedene Arten der Drahtfilamente vorgesehen, dickere und dünnere. Die Drahtfilamente weisen regelmäßig eine Filamentdicke im Bereich von 30 bis 300 Mikrometer [µm], insbesondere im Bereich von 50 bis 150 µm. Falls unterschiedliche Drahtfilamente zum Aufbau des Gewebes vorgesehen sein sollten, haben dickere Drahtfilamente bevorzugt eine Filamentdicke von ca. 100 bis 300 µm und dünnere Drahtfilamente bevorzugt eine Filamentdicke von ca. 30 bis 150 µm.

Außerdem weist die Sieblage in der Mehrzahl Öffnungen mit einer Weite auf. Ganz besonders bevorzugt ist dabei, dass zumindest 90 % der Öffnungen eine solche

Weite aufweisen. Mit "Weite" ist die größte Weite bezüglich der Öffnungen gemeint, wenn diese nicht rund sind. Im Hinblick auf die Weite ist ein Bereich von 0,1 bis 0,25 mm vorgesehen. Damit besteht ausreichend Sicherheit für den Turbo- ' lader, so dass entsprechende Fremdkörper aufgehalten werden, gleichzeitig wird das angesaugte Abgas bezüglich der Druckverhältnisse nur gering beeinflusst.

Gemäß einer Weiterbildung der Anordnung wird vorgeschlagen, dass die Sieblage mindestens 10 Quadratzentimeter [cm²] Siebfläche pro 1,0 Liter [1] Hubraum der Verbrennungskraftmaschine bereit stellt. Bevorzugt ist eine Ausgestaltung, wobei die Sieblage mindestens 25 cm² Siebfläche pro 1,01 Hubraum der Verbrennungskraftmaschine bereit stellt. Das bedeutet mit anderen Worten beispielsweise, dass bei einer Verbrennungskraftmaschine, die einen Dieselmotor und einen Hubraum von 2,01 aufweist, eine Sieblage in der Abgasrückführleitung eingesetzt wird, die mindestens 20 cm², vorzugsweise mindestens 50 cm², Siebfläche aufweist. Dabei generiert die Sieblage bei hier üblichen Strömungsbedingungen während des Betriebes in der Abgasrückführleitung regelmäßig einen Druckverlust von nicht mehr als 20 Millibar [mbar], insbesondere von höchstens 10 mbar.

Gemäß einer Weiterbildung wird auch vorgeschlagen, dass die Sieblage schräg zur Strömungsrichtung des Abgases durch die Abgasrückführleitung positioniert ist. Durch die schräge Anströmung der Sieblage, gerade in Verbindung mit einer größeren Ausführung der Sieblage als der mittlere Querschnitt, wird ein Durchströmungsverhalten des Abgases unterstützt, welches einen geringen Druckverlust zur Folge hat. Grund hierfür ist insbesondere auch, dass durch die schräge Anordnung eine erhöhte Anzahl von Durchtrittsöffnungen für das Abgas bereitgestellt wird, so dass trotz lokaler Verstopfungen der Sieblage während des Betriebes der Abgasrückführleitung gleichwohl ein geringer Druckverlust aufrecht erhalten werden kann.

Nach einer Weiterbildung der Anordnung weist die Abgasrückführleitung eine lokale Erweiterung im Bereich der Sieblage auf. Damit ist insbesondere gemeint, dass im Bereich der Sieblage ein größerer Querschnitt der Abgasrückführleitung verwirklicht ist. Damit ist eine Art Diffusor gebildet, der durch eine Aufweitung des Strömungsquerschnittes eine Verlangsamung der Strömungsgeschwindigkeit des Abgases in der Abgasrückführleitung zur Folge hat. Auch diese Maßnahme führt dazu, dass ein Durchströmen der Sieblage mit möglichst geringem Druckverlust einsetzt. Bevorzugt ist die lokale Erweiterung so gestaltet, dass zumindest eine Vergrößerung des Querschnitts der Abgasrückführleitung um 30 % realisiert ist. Die Erweiterung umfasst dabei vorteilhafterweise auch einen Verbindungsbereich von Segmenten der Abgasrückführleitung, wie beispielsweise Flansche oder dergleichen. Damit wird gleichzeitig die Möglichkeit einer dauerhaften und sicheren Fixierung der Sieblage zwischen den Segmenten der Abgasrückführleitungen eröffnet.

Einer weiteren Ausgestaltung der Anordnung zufolge sind die Drahtfilamente miteinander stoffschlüssig verbunden. Auch wenn die Bereitstellung der Drahtfilamente in Form eines Gewebes bereits teilweise eine ausreichende Verbindung der Drahtfilamente zueinander verwirklicht, bei denen die Öffnungen dauerhaft ihre Weite beibehalten, so kann auch hier eine fügetechnisch, stoffschlüssige Verbindung zwischen den Drahtfilamenten vorteilhaft sein. Grundsätzlich ist ein Verlöten (so genanntes "brazing"), Versintern und/oder Verschweißen der Drahtfilamente möglich. Bevorzugt ist hier eine Schweißverbindung, insbesondere eine Schweißverbindung, die nach dem Kondensator-Impuls-Schweißen realisiert wurde. Beim Kondensator-Impuls-Schweißen werden die Drahtfilamente unter Druck mit einem Strom beaufschlagt und dabei verschweißt

Zudem kann die Anordnung dadurch weitergebildet werden, dass die Sieblage mit mehreren Schichten gebildet ist, wobei die Schichten miteinander verbunden sind. Eine Schicht umfasst dabei regelmäßig eine Siebkonstruktion, die mit Drähten und/oder Drahtfilamenten gebildet ist. Diese metallischen Komponenten der Sieb-lage bzw. der Schichten sind nunmehr bevorzugt miteinander verschweißt, wobei sie insbesondere direkt aneinander liegend ausgebildet sind. Die Schichten können dabei unterschiedliche Funktionen aufweisen, beispielsweise eine Siebfunktion, eine Haltefunktion, eine Stromzuführfunktion und dergleichen. Ergänzend ist anzumerken, dass die Verbindung insbesondere direkt bzw. unmittelbar ausgeführt ist, demnach also nicht nur einer Verbindung über die Abgasleitung vorliegt. Vielmehr können zusätzliche Halteelemente und/oder ein direkter Kontakt der Schichten miteinander die Verbindung darstellen.

In diesem Zusammenhang wird vorgeschlagen, dass eine Schicht mit einer Drahtkonstniktion ausgeführt ist, die mit Zwischenräumen eines Ausmaß von mindestens 5,0 mm ausgeführt ist. Damit ist die Drahtkonstruktion mit einer signifikant größeren Offenheit ausgeführt. Diese Drahtkonstruktion hat demnach primär eine Haltefunktion. Grundsätzlich ist nicht zwingend erforderlich, dass die Drahtkonstruktion und ein als Gewebe ausgeführte Sieblage die gleiche Fläche aufweisen, dies ist jedoch bevorzugt. Im Hinblick auf die Drahtkonstruktion wird auch vorgeschlagen, dass diese mit (insbesondere dicken) Drahtfilamenten gebildet sind, die in etwa an die gleichen Dimensionen wie oben angegeben aufweisen.

Ganz besonders bevorzugt ist diese Ausgestaltung der Anordnung dann, wenn die Sieblage in Strömungsrichtung gesehen einem keramischen Wandfilter nachgeordnet ist. Mit einem "Wandfilter" sind insbesondere so genannte "wall flow filter" gemeint, die nach Art eines mit porösem Material gebildeten Wabenkörpers geformt sind, wobei die Kanäle wechselseitig verschlossen sind. Damit erfolgt eine gezwungene Strömung des Abgases durch die porösen Wände des Wabenkörpers. Es hat sich gezeigt, dass gerade bei Betrieb einer Abgasanlage mit einem solchen Wandfilter, insbesondere wenn Siliziumcarbid umfasst, immer wieder Bestandteile abgelöst werden, die nachgelagerte Komponenten des Abgassystems gefährden. Deshalb wird hier nun vorgeschlagen, eine solche Sieblage in Strömungsrichtung stromabwärts des keramischen Wandfilters vorzusehen. Dabei schützt die Sieblage insbesondere den nachgeschalteten Turbolader vor den abgelösten Teilen des keramischen Wandfilters.

Besonders bevorzugt ist auch eine Ausgestaltung, bei der die Sieblage zwischen Kühler der Abgasrückführleitung und dem Turbolader angeordnet ist. Mit dem "Kühler" ist insbesondere ein Abgaskühler gemeint. In dem das Abgas zunächst mittels des Abgaskühler auf eine niedrigere Temperatur gebracht wurde, durchströmt das Abgas die Abgasrückführleitung gleichzeitig mit einer etwas geringeren Strömungsgeschwindigkeit. Dies hat wiederum Vorteile beim Durchströmen der Sieblage, da diese einen geringeren Druckverlust aufweist, verglichen mit dem noch heißen Abgas vor dem Abgaskühler.

Wie bereits mehrfach angedeutet, wird die vorstehend beschriebene Anordnung insbesondere in Kombination mit einem Kraftfahrzeug vorgeschlagen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung veranschaulichen, die Erfindung jedoch nicht darauf begrenzt ist. Es zeigen schematisch:
Fig. 1: eine erste Ausführung einer erfindungsgemäßen Anordnung,
Fig. 2: eine bevorzugte Ausführungsvariante der Sieblage,
Fig. 3: eine weitere Ausführungsvariante der Sieblage, und
Fig. 4: eine weitere Ausführungsvariante der erfindungsgemäßen Anordnung.

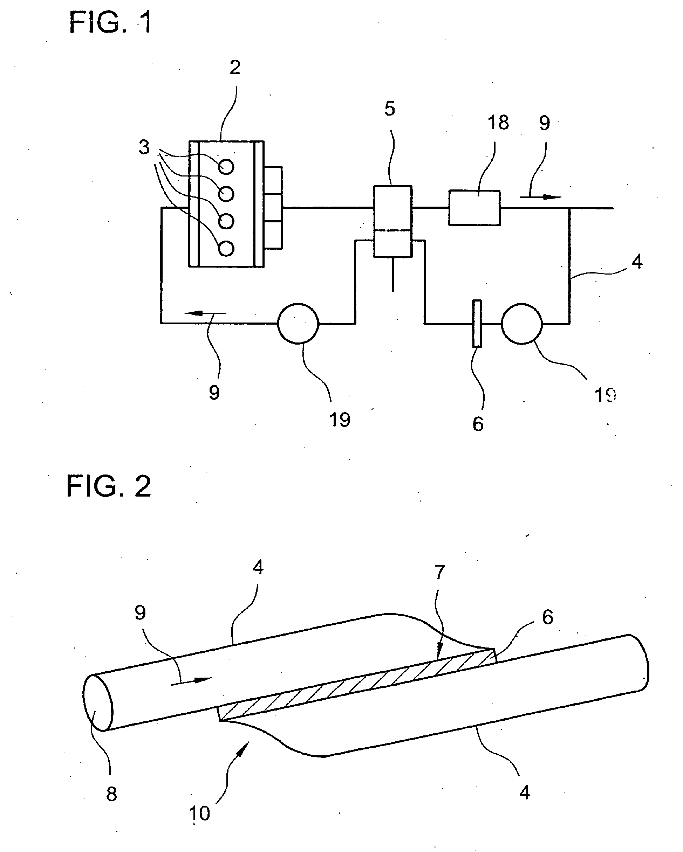

Fig. 1 zeigt schematisch eine erste Ausführungsvariante einer Anordnung 1 zur Behandlung von Abgasen einer Verbrennungskraftmaschine 2. Die Verbrennungskraftmaschine 2 ist hier mit vier Zylindern ausgeführt, die jeweils einen Verbrennungsraum aufweisen. Die Summe dieser Volumina der Verbrennungsräume ergibt den Hubraum 3 der Verbrennungskraftmaschine 2. Das in der Verbrennungskraftmaschine 2 erzeugte Abgas verlässt die Verbrennungskraftmaschine 2 in Strömungsrichtung 9 und durchströmt zunächst die Turbine eines Turboladers 5, bevor sie nachfolgend einen keramischen Wandfilter 18 erreicht. In Strömungsrichtung dem keramischen Wandfilter 18 nachfolgend ist dann eine Abzweigung für eine Abgasrückführleitung 4 gezeigt, wobei ein Teil des Abgases wieder zurück in Strömungsrichtung 9 zur Verbrennungskraftmaschine 2 geführt wird. Das Abgas in der Abgasrückführleitung 4 wird dann zunächst einem Kühler 19, nämlich einem (optionalen) Abgaskühler, zugeführt, wobei die Temperatur des Abgases reduziert wird. Im Anschluss daran durchströmt das Abgas eine Sieblage 6 bevor es dem Verdichter des Turboladers 5 gemeinsam mit der Verbrennungsluft zugeführt wird. Der komprimierte Abgasstrom wird dann beispielsweise noch einem weiteren Kühler 19 (insbesondere einem sogenannten Ladeluftkühler), zugeführt und schließlich wieder in die Verbrennungskraftmaschine eingeleitet.

Eine konkrete Ausführungsvariante der Abgasrückführleitung 4 mit einer Sieblage 6 ist in Fig. 2 veranschaulicht. Die Abgasrückführleitung 4 ist dabei normalerweise im Wesentlichen rund ausgeführt, so dass sich der angedeutete mittlere Querschnitt 8 ergibt. Nunmehr ist eine Konstruktion der Gasrückführleitung 4 mit einer Erweiterung 10 vorgesehen, in der die Sieblage 6 positioniert ist. Bei der veranschaulichten Ausführungsvariante weisen die beiden Abschnitte der Abgasrückführleitung eine Art Flansch auf, der seitlich in Erstreckungsrichtung der Abgasrückführleitung ausgebildet ist. Diese Flansche dienen mehr zur Aufnahme der Sieblage 6, die so schräg zur Strömungsrichtung 9 des Abgases Positioniert ist und eine Siebfläche 7 aufweist, die deutlich größer als der mittlere Querschnitt 8 der Abgasrückführleitung 4 ist. Eine solche Sieblage zeichnet sich durch einen besonders geringen Druckverlust hinsichtlich des Durchströmens von Abgas aus.

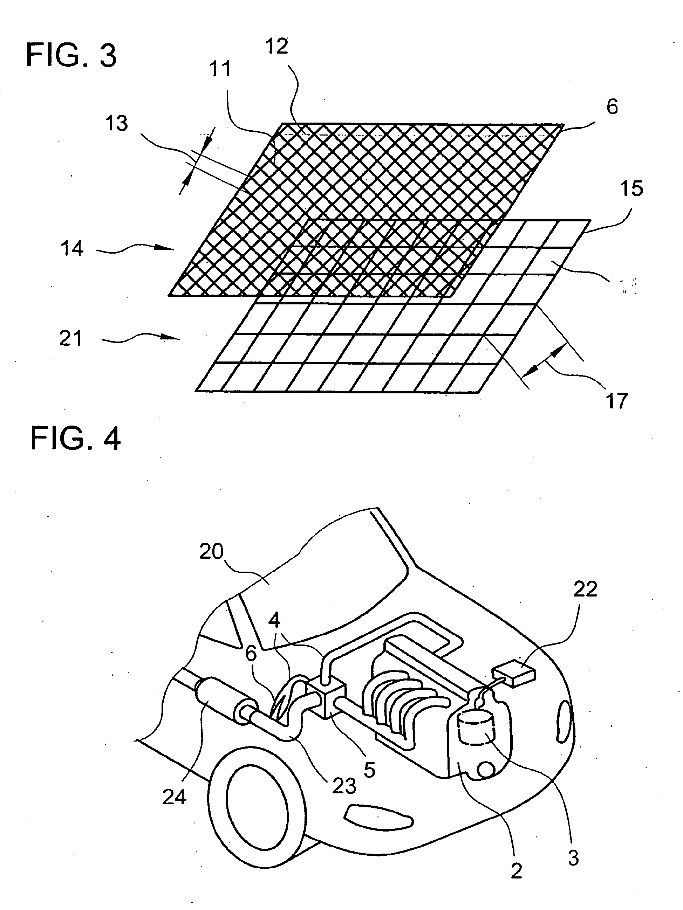

Fig. 3 veranschaulicht eine Sieblage 6 mit mehreren Schichten, nämlich einer ersten Schicht 14 und einer zweiten Schicht 21. Die erste Schicht 14 umfasst eine Sieblage 6 aus einem Gewebe mit Drahtfilamenten 11. Die Drahtfilamenten 11 sind so miteinander verwebt, dass Öffnungen 12 mit einer Weite 13 von mindestens 0,08 mm gebildet sind. Die zweite Schicht 21 umfasst dahingegen eine Drahtkonstruktion 21 mit einer Drahtkonstruktion 15, die mit Zwischenräumen 16 eines Ausmaßes 17 von mindestens 5 mm ausgeführt ist. Das Gewebe und die Drahtkonstruktion 15 sind miteinander verschweißt, wobei eine Explosionsdarstellung gewählt wurde. Letztendlich liegen beide Schichten unmittelbar aufeinander und sind vorteilhafterweise mit einem Impuls-Kondensator-Schweißvorgang miteinander verbunden. Im Hinblick auf die Ausrichtung einer solchen Sieblage im Abgasstrom wird bevorzugt, dass das Abgas zunächst das Gewebe durchströmt, anschließend dann die Drahtkonstruktion 15.

Fig. 4 veranschaulicht nun eine weitere Ausführungsvariante der Anordnung 1 in einem Kraftfahrzeug 20. Zentrisch dargestellt ist wiederum die Verbrennungskraftmaschine 2 mit dem teilweise angedeuteten Hubraum 3. Die Betriebsweise der Verbrennungskraftmaschine 2, der Abgasrückführung und ähnlicher Prozesse wird regelmäßig mit einer Motorsteuerung 22 gesteuert. Ausgehend von der Verbrennungskraftmaschine 2 strömt das Abgas zunächst wieder hin zum Turbolader 5 und dann weiter die Abgasleitung 23 entlang hin zu ggf. vorgesehenen katalytischen Konvertern 24. Von der Abgasleitung 23 führt die Abgasrückführleitung 4 weg, die eine Verbindung hin zum Turbolader 5 bereitstellt. Bevor das Abgas in der Abgasrückführleitung 4 den Turbolader 5 erreicht, ist wiederum eine Sieblage 6 vorgesehen, die von dem Abgas durchströmt wird. In dieser Ausführungsvariante ist die Sieblage 6 eines Sackes bzw. einer einfachen Faltung ausgestaltet, die insbesondere durch die Bereitstellung einer entsprechenden Drahtkonstruktion selbst formstabil ist. Im Turbolader 5 verdichteter der Abgasstrom wird nunmehr mit der Ladeluft gemeinsam wieder der Verbrennungskraftmaschine 2 zugeführt.

Die hier vorgeschlagenen Maßnahmen stellen insbesondere einen Schutz für den Turbolader in der Abgasrückführleitung dar, wobei gleichzeitig eine möglichst geringe Beeinflussung der Strömung des Abgases und damit auch die gewünschten Ladedrücke dauerhaft eingehalten werden können.

### Bezugszeichenliste

- 1: Anordnung
- 2: Verbrennungskraftmaschine
- 3: Hubraum
- 4: Abgasrückführleitung
- 5: Turbolader
- 6: Sieblage
- 7: Siebfläche
- 8: Querschnitt
- 9: Strömungsrichtung
- 10: Erweiterung
- 11: Drahtfilament
- 12: Öffnung
- 13: Weite
- 14: erste Schicht
- 15: Drahtkonstruktion
- 16: Zwischenraum
- 17: Ausmaß
- 18: Wandfilter
- 19: Kühler
- 20: Kraftfahrzeug
- 21: zweite Schicht
- 22: Motorsteuerung
- 23: Abgasleitung
- 24: katalytischer Konverter

## Patentansprüche

1. Anordnung (1) zur Behandlung von Abgasen einer Verbrennungskraftmaschine (2) mit einem vorgegebenen Hubraum (3), die eine Abgasrückführleitung (4) aufweist, wobei das durch die Abgasrückführleitung (4) mit einer Strömungsrichtung (9) hindurch strömende Abgas mit einem Turbolader (5) zusammenwirkt und in der Abgasrückführleitung (4) in Strömungsrichtung (9) vor dem Turbolader (5) eine Sieblage (6) vorgesehen ist, die größer als ein mittlerer Querschnitt (8) der Abgasrückführleitung (4) ist, **dadurch gekennzeichnet, dass** die Sieblage (6) ein Gewebe mit Drahtfilamenten (11) umfasst und dieses eine Mehrzahl von Öffnungen (12) mit einer Weite (13) in einem Bereich von 0,1 bis 0,25 Millimeter aufweist und bei dem Gewebe zwei verschiedene Arten Drahtfilamente vorgesehen sind, wobei die verschiedenen Arten Drahtfilamente unterschiedliche Dicken aufweisen.

2. Anordnung (1) nach Patentanspruch 1, bei der die Sieblage (6) mindestens 10 Quadratzentimeter Siebfläche (7) pro 1,0 Liter Hubraum (3) der Verbrennungskraftmaschine (2) bereit stellt.

3. Anordnung (1) nach Patentanspruch 1 oder 2, bei der die Sieblage (6) schräg zur Strömungsrichtung (9) des Abgases durch die Abgasrückführleitung (4) positioniert ist.

4. Anordnung (1) nach einem der vorhergehenden Patentansprüche, bei der die Abgasrückführleitung (4) eine lokale Erweiterung (10) im Bereich der Sieblage (6) aufweist.

5. Anordnung (1) nach einem der vorhergehenden Patentansprüche
, bei der die Drahtfilamente (11) miteinander stoffschlüssig verbunden sind.

6. Anordnung (1) nach einem der vorhergehenden Patentansprüche, bei der die Sieblage (6) mit mehreren Schichten (14, 21) gebildet ist, wobei die Schichten (14) miteinander verbunden sind.

7. Anordnung (1) nach Patentanspruch 6, bei der eine Schicht (21) mit einer Drahtkonstruktion (15) ausgeführt ist, die mit Zwischenräumen (16) eines Ausmaß (17) von mindestens 5,0 Millimeter ausgeführt ist.

8. Anordnung (1) nach einem der vorhergehenden Patentansprüche, bei der die Sieblage (6) in Strömungsrichtung (9) einem keramischen Wandfilter (18) nachgeordnet ist.

9. Anordnung (1) nach einem der vorhergehenden Patentansprüche, bei der die Sieblage (6) zwischen einem Kühler (19) der Abgasrückführleitung (4) und dem Turbolader (5) angeordnet ist.

10. Kraftfahrzeug (20) aufweisend wenigstens eine Anordnung (1) nach einem der vorhergehenden Patentansprüche.

## Claims

1. Arrangement (1), for treating exhaust gases of an internal combustion engine (2) having a predetermined displacement volume (3), comprising an exhaust gas recirculation line (4), wherein the exhaust gas flowing through the exhaust gas recirculation line (4) having a direction of flow (9) interacts with a turbocharger (5), and a screening layer (6) which is larger than an average cross section (8) of the exhaust gas recirculation line (4) is provided in the exhaust gas recirculation line (4) in direction of flow (9) upstream of the turbocharger (5),
**characterized in that**
the screening layer (6) comprises a fabric of wire filaments (11) and said screening layer (6) has a plurality of openings (12) having a width (13) in a region of 0.1 to 0.25 millimeters and in said fabric are provided two different types of wire filaments, wherein the different types of wire filaments have a different thickness.

2. Arrangement (1) according to patent claim 1, in which the screening layer (6) provides a screening area (7) of at least 10 square centimeters per 1.0 liter of displacement volume (3) of the internal combustion engine (2).

3. Arrangement (1) according to patent claim 1 or 2, in which the screening layer (6) is positioned obliquely with respect to the direction of flow (9) of the exhaust gas through the exhaust gas recirculation line (4).

4. Arrangement (1) according to one of the preceding patent claims, in which the exhaust gas recirculation line (4) has a local widening (10) in the region of the screening layer (6).

5. Arrangement (1) according to one of the preceding patent claims, in which the wire filaments (11) are integrally material-connected to one another.

6. Arrangement (1) according to one of the preceding patent claims, in which the screening layer (6) is formed with a plurality of plies (14, 21), the plies (14) being connected to one another.

7. Arrangement (1) according to patent claim 6, in which one ply (21) is configured with a wire construction (15) which is configured with interspaces (16) having a dimension (17) of at least 5.0 millimeters.

8. Arrangement (1) according to one of the preceding patent claims, in which the screening layer (6) is arranged downstream of a ceramic wall filter (18) in the direction of flow (9).

9. Arrangement (1) according to one of the preceding patent claims, in which the screening layer (6) is arranged between a cooler (19) of the exhaust gas recirculation line (4) and the turbocharger (5).

10. Motor vehicle (20) comprising at least one arrangement (1) according to one of the preceding patent claims.

## Revendications

1. Arrangement (1) pour traiter des gaz d'échappement d'une machine à combustion interne (2) avec une cylindrée prédéterminée (3), qui a une conduite de recyclage de gaz d'échappement (4), le gaz d'échappement s'écoulant à travers la conduite de recyclage de gaz d'échappement (4) avec un sens d'écoulement (9), coopère avec un turbocompresseur (5) et une couche de crible (6) étant prévue dans le sens d'écoulement (9) en amont du turbocompresseur (5) dans la conduite de recyclage de gaz d'échappement (4), laquelle couche de crible est plus grande qu'une section transversale moyenne (8) de la conduite de recyclage de gaz d'échappement (4), **caractérisé en ce que** la couche de crible (6) comprend un tissu avec des filaments en fil métallique (11) et celui-ci présente une pluralité d'ouvertures (12) avec une largeur (13) de l'ordre de 0,1 à 0,25 mm et quant au tissu il y a deux genres différents de filaments en fil métallique, les genres différents de fil métallique ayant des épaisseurs différentes.

2. Arrangement (1) selon la revendication 1, dans le cas duquel la couche de crible (6) met à disposition au moins 10 cm² de surface de crible (7) par 1,0 litres de cylindrée (3) de la machine à combustion interne (2).

3. Arrangement (1) selon la revendication 1 ou 2, dans le cas duquel la couche de crible (6) est positionnée de façon oblique par rapport au sens d'écoulement (9) du gaz d'échappement à travers la conduite de recyclage de gaz d'échappement 4.

4. Arrangement (1) selon l'une des revendications précédentes, dans le cas duquel la conduite de recyclage de gaz d'échappement (4) a un élargissement local (10) dans la région de la couche de crible (6).

5. Arrangement (1) selon l'une des revendications précédentes, dans le cas duquel les filaments en fil métallique (11) sont reliés entre eux de façon matériellement jointive.

6. Arrangement (1) selon l'une des revendications précédentes, dans le cas duquel la couche de crible (6) est formée avec une pluralité de couches (14, 21), les couches (14) étant reliées les unes aux autres.

7. Arrangement (1) selon la revendication 6, dans le cas duquel une couche (21) est conçue avec une construction de fil métallique (15) qui est réalisée avec des interstices (16) d'une dimension (17) d'au moins 5,0 millimètres.

8. Arrangement (1) selon l'une des revendications précédentes, dans le cas duquel la couche de crible (6) est agencée dans le sens d'écoulement (9) en aval d'un filtre céramique de paroi (18).

9. Arrangement (1) selon l'une des revendications précédentes, dans le cas duquel la couche de crible (6) est agencée entre un refroidisseur (19) de la conduite de recyclage de gaz d'échappement (4) et le turbocompresseur (5).

10. Véhicule automobile (20) qui a au moins un arrangement (1) selon l'une des revendications précédentes.
